# EUROPÄISCHE PATENTSCHRIFT

(11) **EP 2 944 523 B1**
(45) Veröffentlichungstag und Bekanntmachung des Hinweises auf die Patenterteilung: **07.08.2019**
(21) Anmeldenummer: 15167275.5
(22) Anmeldetag: 12.05.2015
(51) Int. Cl.: B60T 3/00, B60P 3/07, B64F 1/16

(54) **AUFFAHRKEIL FÜR EIN FAHRZEUG**
RAMP FOR A VEHICLE
PROLONGATEUR DE RAMPE POUR VÉHICULE

(30) Priorität: 13.05.2014 DE 202014102233 U
(43) Veröffentlichungstag der Anmeldung: 18.11.2015
(73) Patentinhaber: Froli Kunststoffwerk Heinrich Fromme, Inh. Margret Fromme-Ruthmann e. Kfr., 33758 Schloß Holte-Stukenbrock (DE)
(72) Erfinder:
(74) Vertreter: Bittner, Thomas L.

(56) Entgegenhaltungen:
- EP-A2- 1 300 305
- US-A- 3 664 466
- US-A- 3 684 233
- US-A- 3 993 167
- US-A- 4 034 961
- US-A- 4 877 211

## Beschreibung

Die Erfindung betrifft einen Auffahrkeil für ein Fahrzeug.

### Hintergrund

Üblicherweise weisen Auffahrkeile eine plane Unterseite auf, welche auf einer Standfläche angeordnet wird. Auf einer ggf. gewölbten Oberseite ist eine Kontaktfläche für einen Reifen gebildet. Ein derartiger Keil ist beispielsweise in dem Dokument DE 20 2011 051 100 U1 offenbart.

Das Dokument DE 298 02 611 U1 beschreibt einen Auffahrkeil mit einer gewölbten Unterseite. Die gewölbte Unterseite und die ebenfalls gewölbte Oberseite bilden mit einer Stirnseite des Keils spitze Kanten. Die spitzen Kanten können bei einem Überfahren des Keils zu einer Beschädigung des Fahrzeugs führen.

Das Dokument US 4,034,961 A offenbart einen Auffahrkeil für ein Fahrzeug mit einer gekrümmten Oberseite und einer gekrümmten Unterseite.

Das Dokument US 4, 877,211 A offenbart einen klappbaren Auffahrkeil für ein Fahrzeug.

### Zusammenfassung

Aufgabe ist es, einen verbesserten Auffahrkeil anzugeben, der eine hohe Standsicherheit gewährleistet, ohne bei Missbrauch oder Unfällen zu einer Beschädigung des Fahrzeugs zu führen.

Diese Aufgabe wird durch den Auffahrkeil für ein Fahrzeug nach dem unabhängigen Anspruch 1 gelöst. Vorteilhafte Ausführungsformen sind Gegenstand von abhängigen Ansprüchen.

Bei dem erfindungsgemäßen Auffahrkeil sind die Übergänge ("Kanten") zwischen der Oberseite und der Stirnseite und / oder zwischen der Unterseite und der Stirnseite gekrümmt. Scharfe Kanten werden hierdurch vermieden. Die Krümmung hat den Vorteil, dass bei einem Überfahren des Auffahrkeils der Keil wegrutscht und eine Beschädigung des Fahrzeugs vermieden wird.

Der Auffahrkeil hat weitere Vorteile: Er kann beim Auffahren nicht wegrutschen, weil eine Kraft immer senkrecht von oben auf den Keil wirkt. Die Krümmung der Oberseite kann die Krümmung eines Reifens angepasst sein. Hierdurch kann der Keil nicht brechen, da sich in diesem Fall die Oberseite um den Reifen schmiegt. Des Weiteren werden die Reifen geschont. Das Auffahren eines Fahrzeugs erfolgt stufenlos gegenüber Stufenkeilen.

Bei einer Verwendung des Auffahrkeils steht ein Reifen des Fahrzeugs auf der nach innen gewölbten Oberseite des Grundkörpers. Die nach außen gewölbte Unterseite wird auf einer Standfläche angeordnet, beispielsweise auf Erde, Gras, Steinen oder Beton.

Der Auffahrkeil kann für verschiedene Fahrzeuge eingesetzt werden, beispielsweise Kraftfahrzeuge, wie Wohnmobile, Caravans, Lastkraftwagen und Personenkraftwagen, oder Anhänger. Die Breite des Auffahrkeils kann an die zu erwartende Breite der Reifen angepasst werden.

Bei einer Ausführungsform kann der Übergang von der Oberseite zu der Stirnseite und / oder von der Unterseite zu der Stirnseite kreisbogenförmig oder abgerundet sein. Alternativ sind andere Krümmungen möglich, beispielsweise Ausschnitte aus einer Ellipse. Die Krümmung kann eine beliebige Form aufweisen, solange der Übergang zwischen der Oberseite und der Stirnseite und / oder zwischen der Unterseite und der Stirnseite nicht in einer scharfen Kante endet.

Die nach außen gewölbte Unterseite und die nach innen gewölbte Oberseite können unterschiedliche Krümmungen aufweisen. Die Krümmung der Unterseite kann einen anderen Verlauf haben als die Krümmung der Oberseite. Die Krümmung der Unterseite und / oder die Krümmung der Oberseite können kreisbogenförmig sein. Die Radien der Krümmungen können gleich oder verschieden sein. Die Krümmung der Unterseite und / oder die Krümmung der Oberseite können als Ausschnitt aus einer Ellipse geformt sein. Hierbei kann es sich um gleiche oder verschiedene Ellipsen handeln. Andere Krümmungsformen für die Unterseite und die Oberseite sind möglich. Die Oberseite kann eine stärkere Krümmung als die Unterseite aufweisen.

Nach einer Weiterbildung können die nach außen gewölbte Unterseite und die nach innen gewölbte Oberseite unterschiedliche Schwerpunkte aufweisen. Der Schwerpunkt (auch geometrischer Schwerpunkt) einer geometrischen Figur (z.B. Kreisbogen, Dreieck, Kegel) ist ein besonders ausgezeichneter Punkt, der auch als eine Art Mittelpunkt verstanden wird. Mathematisch entspricht der Schwerpunkt der Mittelung aller Punkte innerhalb der Figur. Die Schwerpunkte können zueinander versetzt sein.

Die Krümmungen und / oder die Schwerpunkte der nach außen gewölbte Unterseite und der nach innen gewölbte Oberseite können aufeinander abgestimmt sein.

Gemäß einer Weiterbildung kann vorgesehen sein, dass der Grundkörper einteilig gebildet ist. Der Grundkörper kann beispielsweise mittels eines Spritzgussverfahrens hergestellt werden. Dies ermöglicht eine einfache Herstellung. Der Grundkörper kann aus einem thermoplastischen Kunststoff gebildet sein, beispielsweise aus einem Polyethylen hoher Dichte. Alternative kann der Grundkörper aus einem Metall, einer Metalllegierung oder aus Holz bestehen.

Die Oberseite und / oder die Unterseite können mit einer abschnittsweisen offenen Oberfläche gebildet sein. Geschlossene Abschnitte und offene Abschnitte können miteinander abwechseln. Beispielsweise kann ein durchgehender oder geschlossener Abschnitt auf der Oberseite auf seiner Rückseite mit voneinander beabstandeten Elementen gebildet sein, die einen offenen Abschnitt auf der Unterseite bilden und umgekehrt.

Die Unterseite kann mit einer abschnittsweise strukturierten Oberfläche gebildet sein, um einen Halt zu verbessern. Beispielsweise können Erhebungen auf der Oberfläche der Unterseite und / oder auf einer Oberfläche der Oberseite gebildet sein. Die Erhebungen können mit einem gleichmäßigen Abstand zueinander angeordnet sein. Die Erhebungen können schräg zu einer Randseite des Auffahrkeils verlaufen.

Das andere (dünnere) Ende des Grundkörpers kann eine nach außen gewölbte Krümmung aufweisen. In diesem Fall ist die "Keilspitze" abgerundet.

### Beschreibung beispielhafter Ausführungsformen

Weitere Ausführungsformen werden im Folgenden unter Bezugnahme auf Figuren einer Zeichnung näher erläutert. Hierbei zeigen:
- Fig. 1: eine Darstellung einer Ausführungsform eines Auffahrkeils,
- Fig. 2: eine andere Darstellung der Ausführungsform nach Fig. 1,
- Fig. 3: eine Darstellung einer weiteren Ausführungsform eines Auffahrkeils,
- Fig. 4: eine weitere Darstellung der Ausführungsform nach Fig. 3,
- Fig. 5: eine weitere Darstellung der Ausführungsform nach Fig. 3,
- Fig. 6: eine weitere Darstellung der Ausführungsform nach Fig. 3,
- Fig. 7: eine weitere Darstellung der Ausführungsform nach Fig. 3,
- Fig. 8: eine weitere Darstellung der Ausführungsform nach Fig. 3 und
- Fig. 9: eine weitere Darstellung der Ausführungsform nach Fig. 3.

Im Folgenden werden für gleiche Komponenten gleiche Bezugszeichen verwendet.

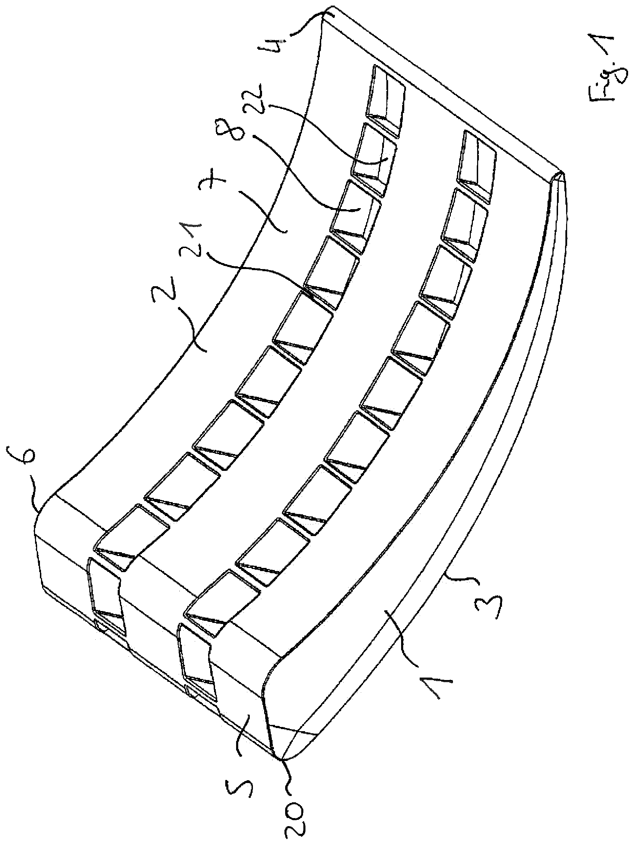

Fig. 1 zeigt eine Ausführungsform eines Auffahrkeils. Der einteilige Grundkörper 1 weist eine nach innen gewölbte Oberseite 2 und eine nach außen gewölbte Unterseite 3 auf. An der "Keilspitze" ist ein abgerundetes Ende 4 gebildet. Eine Stirnseite 5 des Grundkörpers 1 weist einen abgerundeten Übergang 6 zu der Oberseite 2 sowie einen abgerundeten Übergang 20 zu der Unterseite 3 auf.

Die Oberseite 2 weist Abschnitte mit geschlossenen Flächen 7 auf. Bei der gezeigten Ausführungsform sind drei Abschnitte mit geschlossenen Flächen 7 gebildet, von denen zwei am rechten und linken Rand des Auffahrkeils gebildet sind. Ein dritter geschlossener Abschnitt ist in der Mitte gebildet. Zwischen den Abschnitten mit geschlossenen Flächen 7 sind offene Flächen 8 gebildet. Die offenen Flächen 8 sind mittels Stegen 21 voneinander getrennt. Die Stege 21 können eine gleichmäßige Dicke aufweisen. Die offenen Flächen 8 haben einen viereckigen (z.B. quadratischen) Querschnitt. Andere Querschnitte sind ebenfalls denkbar. Unterseiten 22 der offenen Flächen 8 sind geschlossen und bilden eine geschlossene Fläche 10 auf der Unterseite 3 des Auffahrkeils.

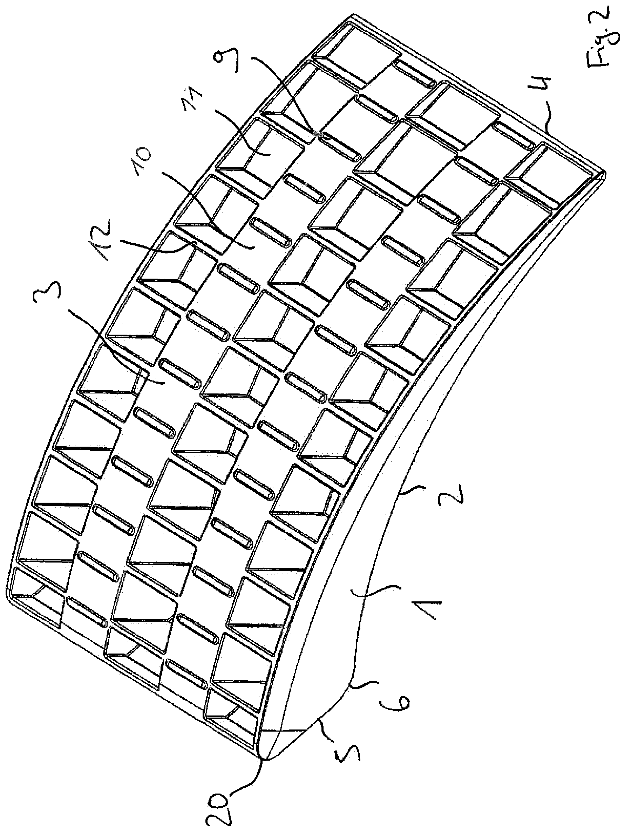

Fig. 2 zeigt eine andere Darstellung des Auffahrkeils nach Fig. 1. Die Unterseite 3 ist mit Abschnitten mit geschlossenen Flächen 10 sowie Abschnitten mit offenen Flächen 11 gebildet. Auf den Abschnitten mit geschlossenen Flächen 10 sind Erhebungen 9 gebildet. Die Erhebungen 9 weisen einen gleichmäßigen Abstand zueinander auf. Andere Anordnungen der Erhebungen sind möglich, beispielsweise ungleichmäßige Abstände zwischen den Erhebungen (nicht dargestellt). Die offenen Flächen 11 sind mittels Stegen 12 voneinander getrennt. Die offenen Flächen 11 haben einen viereckigen (z.B. quadratischen) Querschnitt, wobei auch andere Querschnitte möglich sind. Unterseiten 13 der offenen Flächen 11 sind geschlossen und bilden die Abschnitte mit geschlossenen Flächen 7 auf der Oberseite 2 des Auffahrkeils.

Auf den Abschnitten mit geschlossenen Flächen 7 auf der Oberseite 2 des Auffahrkeils können ebenfalls Erhebungen gebildet sein, beispielsweise mit gleichmäßigem oder ungleichmäßigem Abstand zueinander (nicht dargestellt).

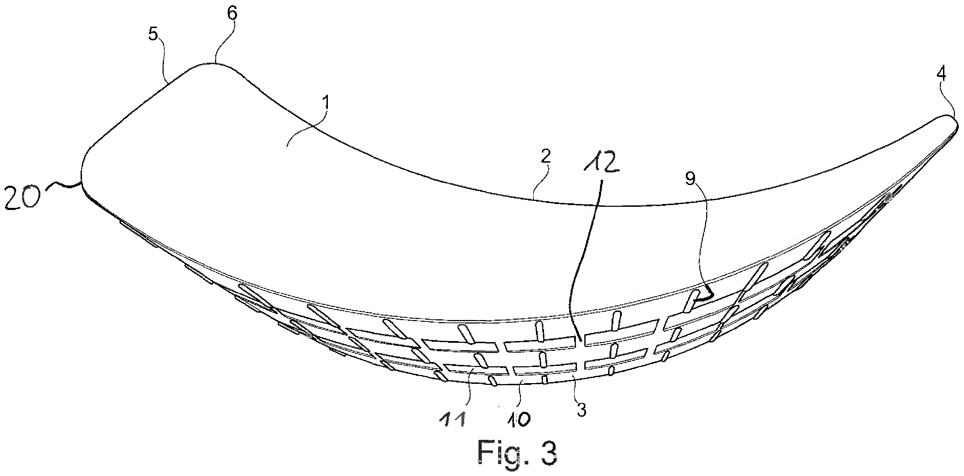

In Fig. 3 ist eine andere Ausführungsform des Auffahrkeils dargestellt. Auch hier laufen die Oberseite 2 und die Unterseite 3 in ein abgerundetes Ende 4. Die Stirnseite 5 des Grundkörpers 1 ist mit einer abgerundeten Kanten 6 zur Oberseite 2 und mit einer abgerundeten Kante 20 zur Unterseite 3 gebildet. Auf der Unterseite 3 sind Abschnitte mit geschlossenen Flächen 10 sowie Abschnitte mit offenen Flächen 11 gebildet. Auf den Abschnitten mit geschlossenen Flächen 10 sind Erhebungen 9 gebildet. Die Erhebungen 9 weisen einen gleichmäßigen Abstand zueinander auf.

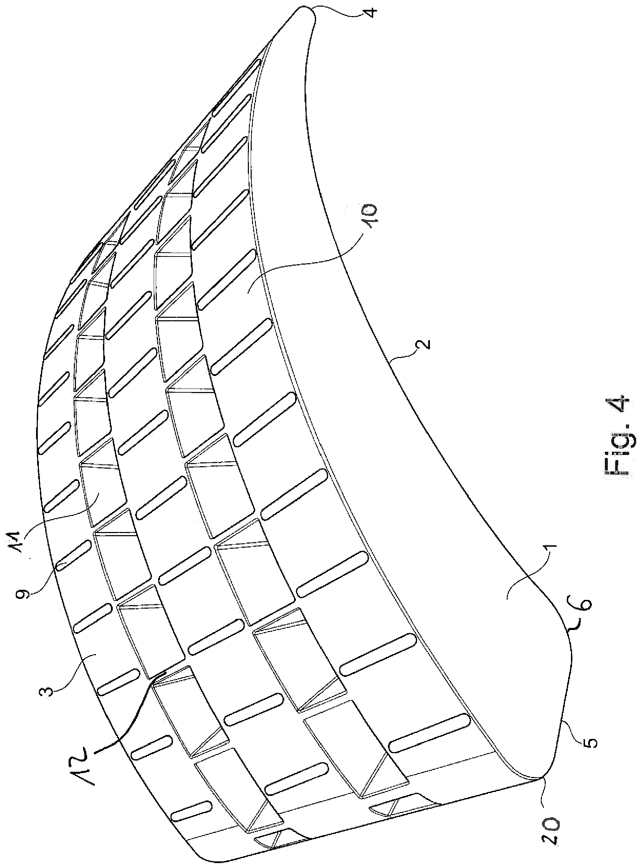

Die Fig. 4 zeigt eine weitere Darstellung der Unterseite 3 des Auffahrkeils nach Fig. 3.

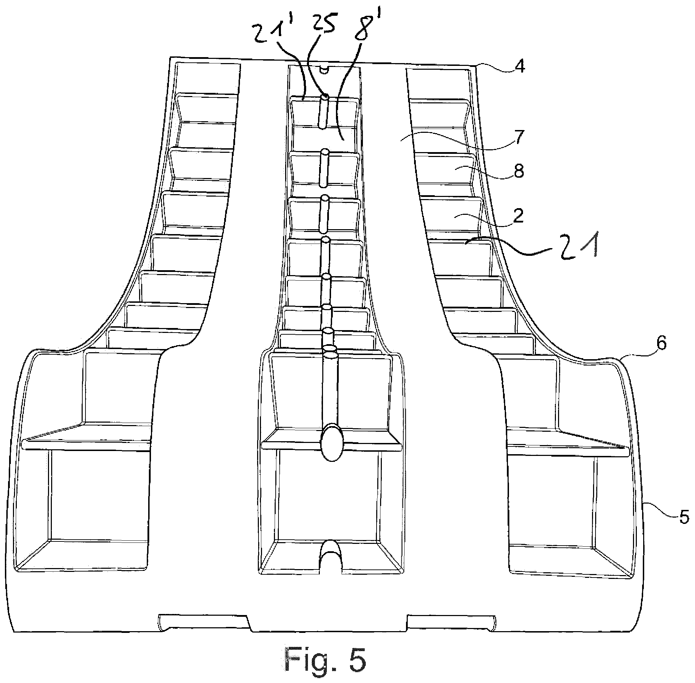

In Fig. 5 ist die Oberseite 2 des Auffahrkeils nach Fig. 3 dargestellt. Die Oberseite 2 weist Abschnitte mit geschlossenen Flächen 7 und Abschnitte mit offenen Flächen 8 auf. In der gezeigten Ausführungsform sind die zwei Abschnitte mit geschlossenen Flächen 7 und drei Abschnitte mit offenen Flächen 8 gebildet. Die Abschnitte mit offenen Flächen 8 sind am linken und rechten Rand sowie in der Mitte der Oberseite 2 gebildet. Zwischen den Abschnitten mit offenen Flächen 8 sind die beiden Abschnitte mit geschlossenen Flächen 7 gebildet. Die offenen Flächen 8 sind mit Stegen 21 voneinander getrennt. Im mittleren Abschnitt mit offenen Flächen 8' sind die offenen Flächen mit Stegen 21' gebildet, die eine Materialverdickung 25 aufweisen. Die Materialverdickung 25 ist mittig der Stege 21' gebildet.

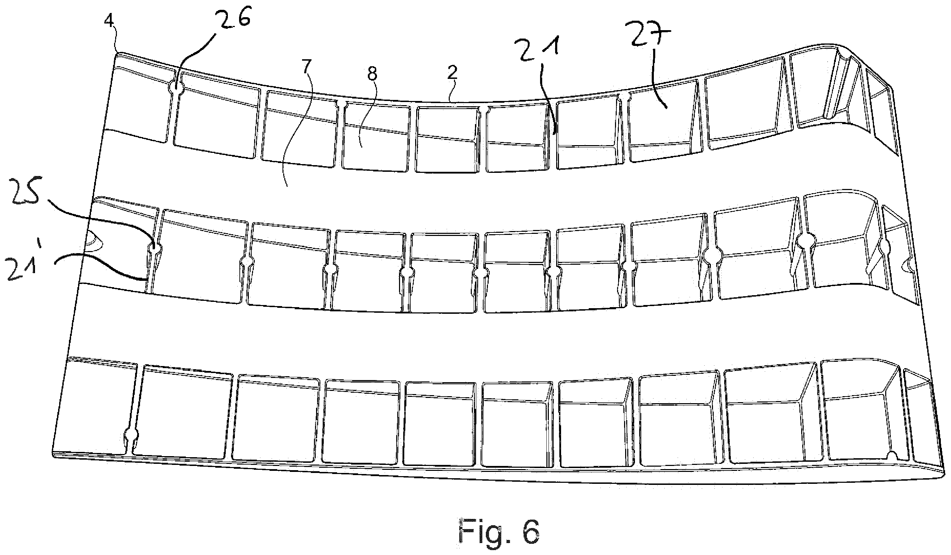

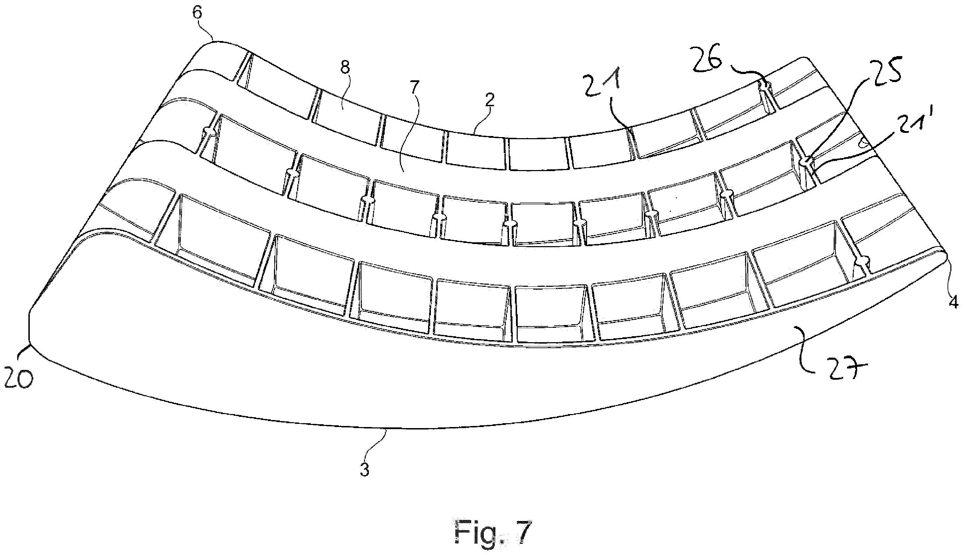

Bei den in Fig. 6 und 7 gezeigten Darstellungen sind bei den äußeren Abschnitten mit offenen Flächen 8 einige der Stege 21 mit einer Materialverdickung 26 gebildet. Die Materialverdickung 26 ist in einem Randbereich der Stege 21 gebildet, beispielsweise an einem Übergang des Stegs 21 zu einer Seitenwand 27 des Auffahrkeils.

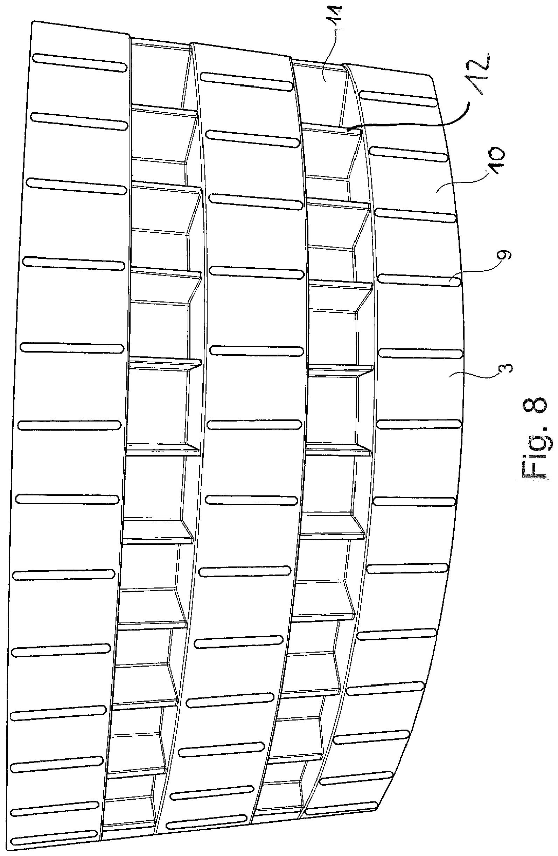

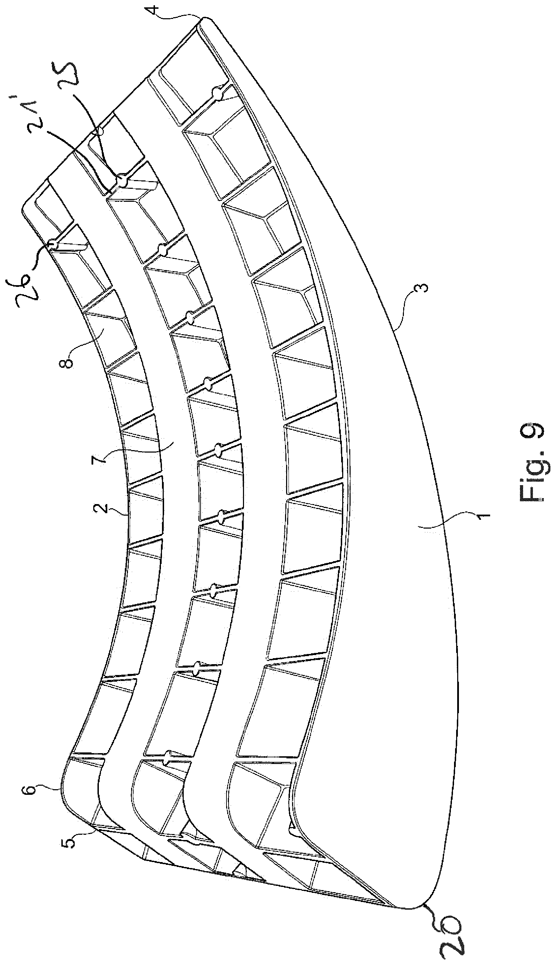

Die Fig. 8 und 9 zeigen weitere Darstellungen des Auffahrkeils nach Fig. 3.

## Patentansprüche

1. Auffahrkeil für ein Fahrzeug, mit einem Grundkörper (1), der eine nach außen gewölbte Unterseite (3) und eine nach innen gewölbten Oberseite (2) aufweist, wobei ein Ende des Grundkörpers (1) eine größere Höhe hat als ein anderes Ende des Grundkörpers (1), das Ende mit der größeren Höhe eine Stirnseite aufweist und ein Übergang von der Oberseite (2) zu der Stirnseite (5) eine Krümmung (6) aufweist,
**dadurch gekennzeichnet, dass**
der Übergang von der Oberseite (2) zu der Stirnseite (5) abgerundet ist, derart, dass der Übergang frei von Kanten ist, und dass die Krümmung (6) einen stumpfen Winkel zwischen der Oberseite (2) und der Stirnseite (5) einschließt.

2. Auffahrkeil nach Anspruch 1, wobei ein Übergang von der Unterseite (3) zu der Stirnseite (5) eine Krümmung (20) aufweist.

3. Auffahrkeil nach Anspruch 1 oder 2, wobei der Übergang von der Oberseite (2) zu der Stirnseite (5) und / oder von der Unterseite (3) zu der Stirnseite (5) kreisbogenförmig ist.

4. Auffahrkeil nach Anspruch 1 und 2, wobei der Übergang von der Oberseite (2) zu der Stirnseite (5) eine andere Krümmung aufweist als der Übergang von der Unterseite (3) zu der Stirnseite (5).

5. Auffahrkeil nach einem der vorangehenden Ansprüche, wobei die nach außen gewölbte Unterseite (3) und die nach innen gewölbte Oberseite (2) unterschiedliche Krümmungen aufweisen.

6. Auffahrkeil nach einem der vorangehenden Ansprüche, wobei die nach außen gewölbte Unterseite (3) und die nach innen gewölbte Oberseite (2) unterschiedliche Schwerpunkte aufweisen.

7. Auffahrkeil nach einem der vorangehenden Ansprüche, wobei die Krümmungen und / oder die Schwerpunkte der nach außen gewölbte Unterseite (3) und der nach innen gewölbte Oberseite (2) aufeinander abgestimmt sind.

8. Auffahrkeil nach einem der vorangehenden Ansprüche, wobei die Oberseite (2) und / oder die Unterseite (3) mit einer abschnittsweisen offenen Oberfläche gebildet sind.

9. Auffahrkeil nach Anspruch 8, wobei auf der Oberseite (2) und / oder der Unterseite (3) geschlossene Abschnitte und offene Abschnitte abwechselnd gebildet sind.

10. Auffahrkeil nach Anspruch 8 oder 9, wobei ein geschlossener Abschnitt auf der Oberseite (2) auf seiner Rückseite mit voneinander beabstandeten Elementen (12) gebildet ist, die einen offenen Abschnitt auf der Unterseite (3) bilden und / oder wobei ein geschlossener Abschnitt auf der Unterseite (3) auf seiner Rückseite mit voneinander beabstandeten Elementen (21) gebildet ist, die einen offenen Abschnitt auf der Oberseite (2) bilden.

11. Auffahrkeil nach einem der vorangehenden Ansprüche, wobei die Oberseite (2) und / oder die Unterseite (3) mit einer abschnittsweise strukturierten Oberfläche gebildet sind.

12. Auffahrkeil nach Anspruch 11, wobei auf einer Oberfläche der Unterseite (3) und / oder auf einer Oberfläche der Oberseite (2) Erhebungen (9) gebildet sind.

13. Auffahrkeil nach Anspruch 12, wobei die Erhebungen (9) mit einem gleichmäßigen Abstand zueinander gebildet sind.

## Claims

1. A ramp for a vehicle comprising a base body (1) which has an outwardly curved underside (3) and an inwardly curved upper side (2), wherein one end of the base body (1) has a greater height than another end of the base body (1), the end having the greater height has a front side and a transition from the upper side (2) to the front side (5) has a curvature (6),
**characterized in that**
the transition from the upper side (2) to the front side (5) is rounded in such a manner that the transition is free from edges and that the curvature (6) encloses an obtuse angle between the upper side (2) and the front side (5).

2. The ramp according to claim 1, wherein a transition from the underside (3) to the front side (5) has a curvature (20).

3. The ramp according to claim 1 or 2, wherein the transition from the upper side (2) to the front side (5) and/or from the underside (3) to the front side (5) is circular arc-shaped.

4. The ramp according to claim 1 and 2, wherein the transition from the upper side (2) to the front side (5) has a different curvature compared with the transition from the underside (3) to the front side (5).

5. The ramp according to one of the preceding claims, wherein the outwardly curved underside (3) and the inwardly curved upper side (2) have different curvatures.

6. The ramp according to one of the preceding claims, wherein the outwardly curved underside (3) and the inwardly curved upper side (2) have different centres of gravity.

7. The ramp according to one of the preceding claims, wherein the curvatures and/or the centres of gravity of the outwardly curved underside (3) and the inwardly curved upper side (2) are matched to one another.

8. The ramp according to one of the preceding claims, wherein the upper side (2) and/or the underside (3) are formed with an open surface in sections.

9. The ramp according to claim 8, wherein closed sections and open sections are formed alternately on the upper side (2) and/or the underside (3).

10. The ramp according to claim 8 or 9, wherein a closed section on the upper side (2) is formed with spaced-apart elements (12) on its rear side, which form an open section on the underside (3) and/or wherein a closed section on the underside (3) is formed with spaced-apart elements (21) on its rear side which form an open section on the upper side (2).

11. The ramp according to one of the preceding claims, wherein the upper side (2) and/or the underside (3) are formed with a structured surface in sections.

12. The ramp according to claim 11, wherein elevations (9) are formed on one surface of the underside (3) and/or on one surface of the upper side (2).

13. The ramp according to claim 12, wherein the elevations (9) are formed with a uniform spacing with respect to one another.

## Revendications

1. Cale d'accès pour un véhicule avec un corps de base (1), qui comporte une face inférieure (3) incurvée vers l'extérieur et une face supérieure (2) incurvée vers l'intérieur, sachant qu'une extrémité du corps de base (1) possède une plus grande hauteur qu'une autre extrémité du corps de base (1), l'extrémité avec la hauteur plus grande comporte une face avant et une transition de la face supérieure (2) à la face avant (5) comporte une courbe (6),
**caractérisée en ce que**
la transition de la face supérieure (2) à la face avant (5) est arrondie de telle manière que la transition est dépourvue d'arêtes et **en ce que** la courbe (6) inscrit un angle obtus entre la face supérieure (2) et la face avant (5).

2. Cale d'accès selon la revendication 1, sachant qu'une transition de la face inférieure (3) à la face avant (5) comporte une courbe (20).

3. Cale d'accès selon la revendication 1 ou 2, sachant que la transition de la face inférieure (2) à la face avant (5) et/ou de la face inférieure (3) à la face avant (5) est en forme d'arc de cercle.

4. Cale d'accès selon la revendication 1 et 2, sachant que la transition de la face supérieure (2) à la face avant (5) comporte une autre courbe en tant que transition de la face inférieure (3) à la face avant (5).

5. Cale d'accès selon l'une quelconque des revendications précédentes, sachant que la face inférieure (3) incurvée vers l'extérieur et la face supérieure (2) incurvée vers l'intérieur comportent des courbes différentes.

6. Cale d'accès selon l'une quelconque des revendications précédentes, sachant que la face inférieure (3) incurvée vers l'extérieur et la face supérieure (2) incurvée vers l'intérieur comportent des centres de gravité différents.

7. Cale d'accès selon l'une quelconque des revendications précédentes, sachant que les courbes et/ou les centres de gravité de la face inférieure (3) incurvée vers l'extérieur et de la face supérieure (2) incurvée vers l'extérieur étant adaptés l'un à l'autre.

8. Cale d'accès selon l'une quelconque des revendications précédentes, sachant que la face supérieure (2) et/ou la face inférieure (3) sont formées avec une surface ouverte par section.

9. Cale d'accès selon la revendication 8, sachant que des sections fermées et des sections ouvertes sont formées en alternance sur la face supérieure (2) et/ou sur la face inférieure (3).

10. Cale d'accès selon la revendication 8 ou 9, sachant qu'une section fermée sur la face supérieure (2) est formée sur sa face arrière avec des éléments (12) à distance les uns des autres, qui forment une section ouverte sur la face inférieure (3) et/ou sachant qu'une section fermée sur la face inférieure (3) est formée sur sa face arrière avec des éléments (21) à distance les uns des autres qui forment une section ouverte sur la face supérieure (2).

11. Cale d'accès selon l'une quelconque des revendications précédentes, sachant que la face supérieure (2) et/ou la face inférieure (3) sont formées avec une surface structurée par section.

12. Cale d'accès selon la revendication 11, sachant que des élévations (9) sont formées sur une surface de la face inférieure (3) et/ou sur une surface de la face supérieure (2).

13. Cale d'accès selon la revendication 12, sachant que les élévations (9) sont formées avec un intervalle uniforme l'une par rapport à l'autre.
